# EUROPÄISCHE PATENTSCHRIFT

(11) **EP 2 612 788 B1**
(45) Veröffentlichungstag und Bekanntmachung des Hinweises auf die Patenterteilung: **11.05.2016**
(21) Anmeldenummer: 12008444.7
(22) Anmeldetag: 19.12.2012
(51) Int. Cl.: B60M 1/24

(54) **Fahrdrahtaufhängung**
carrier for contact wire
dispositif de suspension d'un ligne de contact

(30) Priorität: 05.01.2012 DE 102012000117
(43) Veröffentlichungstag der Anmeldung: 10.07.2013
(73) Patentinhaber: BICC Holdings GmbH, 81373 München (DE)
(72) Erfinder: Ruiz Garcia, Josè Francisco, 80997 München (DE)
(74) Vertreter: Oppermann, Frank

(56) Entgegenhaltungen:
- EP-A1- 1 484 214
- WO-A1-02/102617
- DE-A1-102009 033 447
- DE-U1-202004 009 416

## Beschreibung

Die Erfindung betrifft eine Stromschiene für Fahrleitungssysteme sowie ein Fahrleitungssystem mit Stromschienen.

Zur Fahrstromversorgung elektrisch betriebener Bahnen sind neben Oberleitungen Stromschienen bekannt. Die Stromschienen sind Teil des Fahrleitungssystems.

Aus der EP 2 255 991 A2 ist eine Stromschiene die dem Oberbegriff des Anspruchs 1 entsprucht mit einem Querträger bekannt, von dem zwei Spannarme ausgehen, an die Klemmarme zur Aufnahme eines Fahrdrahtes angeformt sind. Die Spannarme und Klemmarme schließen einen Zwischenraum ein, der Laschen zur Verbindung der Stromschienen aufnimmt. Die EP 0 828 629 B1 beschreibt eine ähnliche Stromschiene, die im Wesentlichen das gleiche Profil wie die aus der EP 2 255 991 A2 bekannte Stromschiene hat.

Die beiden oben genannten Stromschienen zeichnen sich dadurch aus, dass sie einen flachen Querträger aufweisen, an dessen Unterseite die nach unten weisenden Schenkel angeformt sind, die in die Klemmarme zur Aufnahme des Fahrdrahtes übergehen.

Obwohl sich die bekannten Stromschienen in der Praxis bewährt haben, besteht das grundsätzliche Problem des Durchhangs der Stromschienen. Um den Durchhang möglichst gering gehalten zu können, sollten die Stromschienen ein möglichst hohes Trägheitsmoment bei einem möglichst geringen Gewicht haben. Darüber hinaus sollten sich die Stromschienen mit möglichst geringem Montageaufwand an den Auslegern der Maste aufhängen lassen.

Der Erfindung liegt die Aufgabe zugrunde, eine Stromschiene zu schaffen, die sich zu einem mit verhältnismäßig geringem Montageaufwand an den Auslegern der Maste aufhängen lässt und sich zum anderen durch ein hohes Trägheitsmoment bei einem geringen Gewicht auszeichnet.

Darüber hinaus ist eine Aufgabe der Erfindung, ein Fahrleitungssystem mit Stromschienen zu schaffen, die leicht montierbar sind und ein hohes Trägheitsmoment bei geringem Gewicht haben, sodass der Durchhang der Stromschienen gering ist.

Die Lösung dieser Aufgaben erfolgt erfindungsgemäß mit den Merkmalen der unabhängigen Patentansprüche. Vorteilhafte Ausführungsformen der Erfindung sind Gegenstand der Unteransprüche.

Die erfindungsgemäße Stromschiene zeichnet sich dadurch aus, dass der in der Einbaulage obere Träger an der Oberseite eine in Längsrichtung des Trägers verlaufende Ausnehmung aufweist, die an den gegenüberliegenden Längsseiten hinterschnitten ist.

Die längslaufende Ausnehmung in dem Träger erlaubt die Befestigung der Stromschienen an den Auslegern des Fahrleitungssystems mittels Verbindungselementen, die in die Ausnehmungen greifen, um eine formschlüssige Verbindung zu schaffen. Damit ist eine schnelle und sichere Montage der Stromschienen an den Auslegern möglich.

Darüber hinaus zeichnet sich die Stromschiene mit der besonderen Ausbildung des oberen Trägers im Vergleich zu den bekannten Stromschienen, die einen flachen oberen Träger aufweisen, durch ein höheres Trägheitsmoment bei gleichem Gewicht aus. Damit kann der Durchhang reduziert bzw. die Längsstützweite vergrößert werden. Die erfindungsgemäße Stromschiene vereinfacht also nicht nur die Montage, sondern verbessert auch das Fahrleitungssystem als solches.

Bei einer bevorzugten Ausführungsform ist die in Längsrichtung verlaufende Ausnehmung des oberen Trägers zur passenden Aufnahme des Hakenkopfes einer Hakenkopfschraube ausgebildet, d. h. die Ausnehmung ist an die Form des Kopfes der Hakenkopfschraube angepasst. Mit der Hakenkopfschraube kann die Stromschiene besonders einfach und kostengünstig am Ausleger befestigt werden. Die Hakenkopfschrauben sind selbst vorzugsweise mit Profilen der Ausleger verschraubt. Vorzugsweise sind die Profile der Ausleger U-Profile, an denen die Hakenkopfschrauben befestigt sind. Anstelle von Hakenkopfschrauben können aber auch alle anderen bekannten Verbindungselemente Verwendung finden, mit denen sich eine formschlüssige Verbindung herstellen lässt.

Die Stromschiene wird vorzugsweise statisch als Durchlaufträger mit Gleichstreckenlast berechnet, wobei die Verbindungselemente an den Momenten-Nullpunkten angeordnet werden. Diese Positionierung der Verbindungselemente reduziert den Durchhang der Stromschiene auf ein Minimum.

Eine besonders bevorzugte Ausführungsform der Stromschiene sieht vor, dass der obere Träger ein unteres Profilstück aufweist, dass die oberen Enden der beiden nach unten weisenden Schenkel miteinander verbindet, wobei sich an die Enden des unteren Profilstücks unter Bildung der an den gegenüberliegenden Längsseiten hinterschnittenen Ausnehmung nach oben erstreckende Schenkel anschließen, an die zu beiden Seiten abstehende obere Arme angeformt sind.

Die beiden oberen Arme ermöglichen die Befestigung der Stromschiene an dem Ausleger nicht nur mit in die Ausnehmungen greifenden Verbindungselementen, sondern auch mit Klemmelementen, die an den Seitenarmen angreifen. Damit ist die erfindungsgemäße Stromschiene universell einsetzbar.

Bei einer weiteren besonders bevorzugten Ausführungsform sind an die beiden Schenkel im Übergangsbereich zu den Klemmarmen zu beiden Seiten abstehende untere Arme ängeformt.

Die besondere Ausbildung des oberen Trägers mit der längslaufenden Ausnehmung und den seitlich abstehenden oberen Armen in Verbindung mit den beiden Schenkeln und Klemmarmen sowie den seitlich abstehenden unteren Armen führt zu einem in Längsrichtung ausreichend steifen Profil, das den Fahrdraht klemmend aufnimmt und sicher hält.

Im Folgenden wird ein Ausführungsbeispiel der Erfindung unter Bezugnahme auf die Zeichnungen im Einzelnen erläutert.

Es zeigen:
- Fig. 1: ein Ausführungsbeispiel der erfindungsgemäßen Stromschiene zusammen mit einem ersten Ausführungsbeispiel des erfindungsgemäßen Verbindungselements zur Befestigung der Stromschiene an einem Ausleger in geschnittener Darstellung, wobei in die Stromschiene ein Verbindungsstück zur Verbindung der Stromschienen untereinander eingesetzt ist,
- Fig. 2: die Stromschiene von Fig. 1 zusammen mit einem zweiten Ausführungsbeispiel des Verbindungselements zur Befestigung der Stromschiene an einem Ausleger in geschnittener Darstellung,
- Fig. 2.1: eine Teilansicht der Stromschiene von Fig. 1 zusammen mit einem dritten Ausführungsbeispiel des Verbindungselements zur Befestigung der Stromschiene an einem Ausleger,
- Fig. 3: eine Seitenansicht eines Abschnitts der Stromschiene von Fig. 1 und
- Fig. 4: ein Ausführungsbeispiel des erfindungsgemäßen Fahrleitungssystems mit der erfindungsgemäßen Stromschiene.

Nachfolgend wird die Stromschiene in der Einbaulage beschrieben, in der die Stromschiene hängend an einem Ausleger befestigt ist. Die Stromschiene 1 weist einen in der Einbaulage oberen Träger 2 auf. Der obere Träger 2 weist an der Oberseite eine in Längsrichtung des Trägers verlaufende Ausnehmung 3 auf, die an den beiden gegenüberliegenden Längsseiten 4, 5 hinterschnitten ist. Die längslaufende Ausnehmung 3 mit den Hinterschneidungen 6, 7 ist derart ausgebildet, dass der Hakenkopf 9 einer Hakenkopfschraube 8 passend in die Ausnehmung eingesetzt werden kann. Breite und Höhe der Ausnehmung 3 sind also an die Abmessungen des Hakenkopfs konventionelle Hakenkopfschrauben angepasst, wobei die Kontur der Hinterschneidungen 6, 7 der Kontur der Haken des Hakenkopfes der Hakenkopfschrauben entspricht.

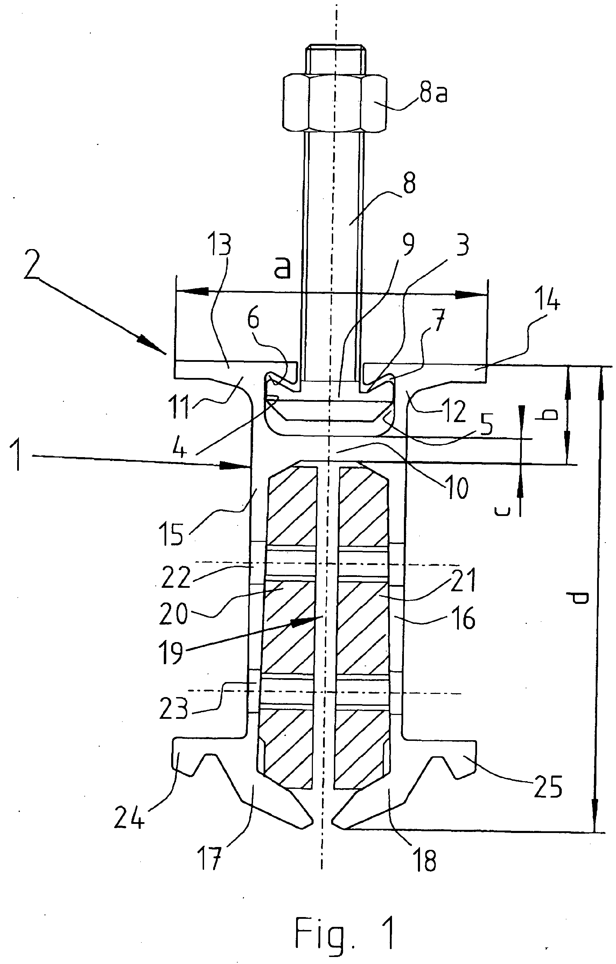

Fig. 1 zeigt die Stromschiene 1 zusammen mit der Hakenkopfschraube 8, deren Hakenkopf 9 in der Ausnehmung 3 sitzt. Die Stormschiene 1 wird an der Hakenkopfschraube 8 befestigt, in dem die Mutter 8A der Hakenkopfschraube 8 festgezogen wird.

Der obere Träger 2 der Stromschiene 1 weist ein unteres Profilstück 10 auf, an dessen Enden sich unter Bildung der hinterschnittenen Ausnehmung 3 nach oben erstreckende Schenkel 11, 12 anschließen. An die beiden oberen Schenkel 11, 12 sind zu beiden Seiten abstehende obere Arme 13, 14 angeformt.

Bei dem vorliegenden Ausführungsbeispiel hat der obere Schenkel 3 eine Breite a von 85 mm und eine Stärke b von 27,5 mm. Die Stärke c des unteren Profilstücks 10 des Trägers 2 ist bei dem vorliegenden Ausführungsbeispiel 7 mm. Dabei ist die Breite d der Stromschiene 130 mm.

An das untere Profilstück 10 des oberen Trägers 2 schließen sich zu beiden Seiten nach unten erstreckende Schenkel 15, 16 an, deren Querschnitt nach unten abnimmt. Die unteren Enden der beiden Schenkel 15, 16 gehen in sich nach innen erstreckende Klemmarme 17, 18 über, die den nicht dargestellten Fahrdraht klemmend aufnehmen.

Der obere Träger 2 schließt mit den beiden Schenkeln 15, 16 und den Klemmarmen 17, 18 einen Zwischenraum 19 zur Aufnahme von zwei Verbindungsstücken 20, 21 ein, mit denen die einzelnen Stromschienen miteinander verbunden werden. Die Verbindungsstücke 20, 21 werden mit nicht dargestellten Schrauben verschraubt, die sich durch Bohrungen 22, 23 der Schenkel 15, 16 erstrecken. An die Schenkel 15, 16 der Stromschiene 1 sind im Übergangsbereich zu den Klemmarmen 17, 18 zu beiden Seiten abstehende untere Arme 24, 25 angeformt.

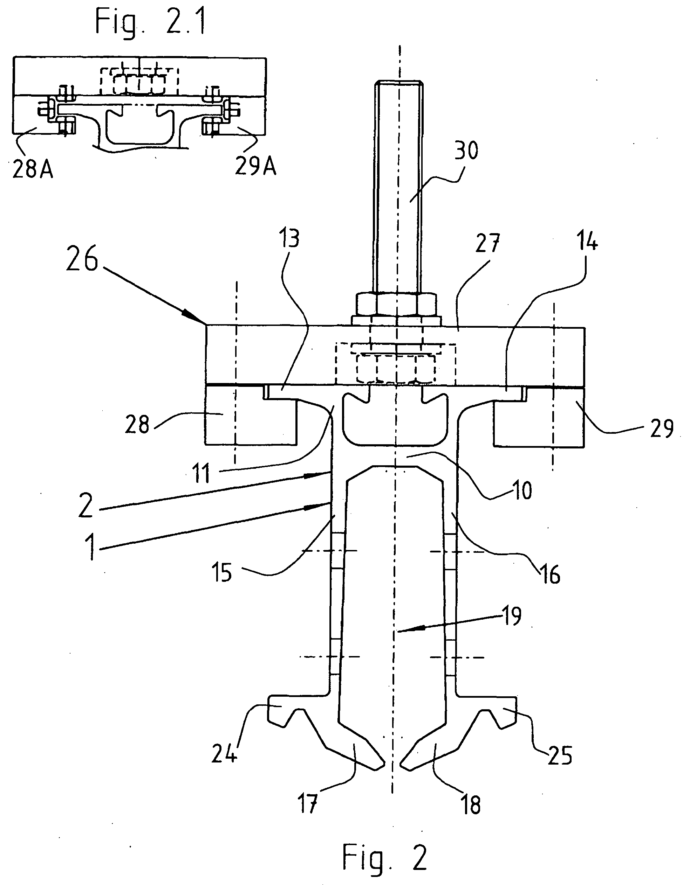

Die Befestigung der erfindungsgemäßen Stromschiene kann nicht nur mit der in Fig. 1 dargestellten Hakenkopfschraube 8 erfolgen, sondern auch mit anderen Verbindungselementen. Fig. 2 zeigt ein alternatives Verbindungselement zur Befestigung der Stromschiene. Die Befestigung der Stromschiene erfolgt bei dem alternativen Ausführungsbeispiel mit einer seitlich an den oberen Armen 13, 14 angreifenden Klemmvorrichtung 26. Die Klemmvorrichtung 26 weist eine Klemmplatte 27 auf, an dessen Unterseite die oberen Arme 13, 14 der Stromschiene 1 untergreifende Klemmteile 28, 29 befestigt sind. Die Klemmteile 28, 29 können mit der Klemmplatte 27 beispielsweise verschraubt werden, um die oberen Arme 13, 14 klemmend zu halten. Die Klemmplatte 27 selbst kann wieder mit einer Schraube 30 an dem Ausleger befestigt werden. Die Stromschiene 1 erlaubt also nicht nur die Befestigung mittels einer Hakenkopfschraube 8, sondern auch mittels einer Klemmvorrichtung 26, an der die Stromschiene fest mit Klemmteilen 28, 29 befestigt ist. Die Befestigung mit der Klemmvorrichtung 26 ist allerdings nicht die bevorzugte Ausführungsform, die eine besonders einfache und schnelle Montage erlaubt. Anstelle der Klemmvorrichtung 26 kann die Stromschiene auch mit der in Fig. 2.1 gezeigten Klemmvorrichtung befestigt werden, die eine gleitende Befestigung der Stromschiene mit den Klemmteilen 28A und 28B vorsieht.

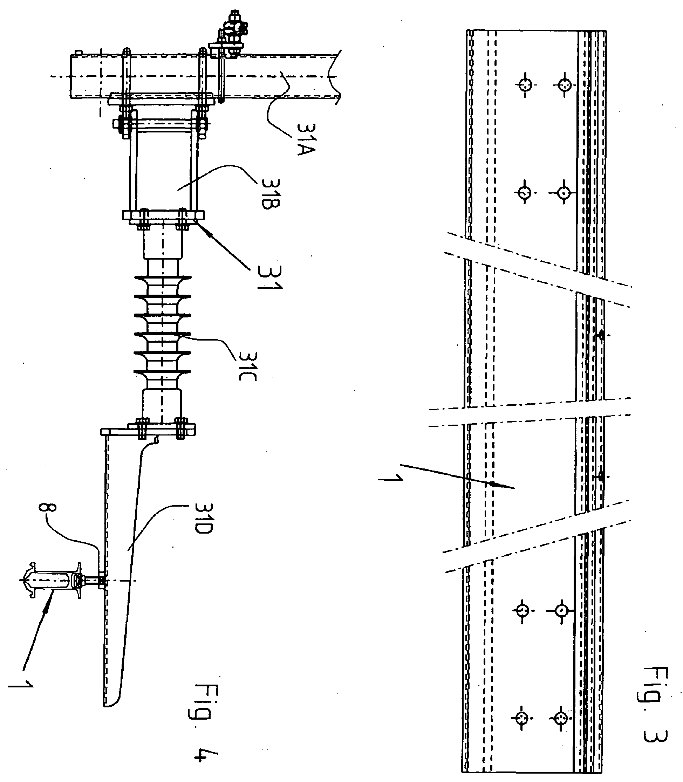

Fig. 4 zeigt einen Teil eines Fahrleitungssystems, bei dem die Stromschiene 1 an einem Ausleger 31 befestigt ist, der wiederum an der Decke eines Tunnels befestigt ist. Der Ausleger 31 weist einen vertikalen an der Decke befestigten Arm 31A und einen horizontalen Arm 31B auf, an dem über einen Isolator 31C ein U-Profil 31D befestigt ist. Mit dem U-Profil 31D ist die Hakenkopfschraube 8 verschraubt, an der wiederum die Stromschiene 1 befestigt ist.

Die Hakenkopfschrauben 8 zur Befestigung der Stromschienen 1 sind entlang der Fahrstrecke an den Momenten-Nullpunkten der einzelnen Stromschienen angeordnet, sodass der Durchhang der Stromschiene auf ein Minimum reduziert wird.

## Patentansprüche

1. Stromschiene mit einem in der Einbaulage oberen Träger (2), an den sich zwei nach unten erstreckende Schenkel (15, 16) anschließen, die in sich nach innen ersteckende Klemmarme (17, 18) zur Aufnahme eines Fahrdrahtes übergehen, wobei der obere Träger (2) sowie die beiden Schenkel (15, 16) und Klemmarme (17, 18) einen Zwischenraum (19) zur Aufnahme von Verbindungsstücken (20, 21) einschließen,
**dadurch gekennzeichnet**,
der obere Träger (2) an der Oberseite eine in Längsrichtung des Trägers verlaufende Ausnehmung (3) aufweist, die an den gegenüberliegenden Längsseiten (11, 12) hinterschnitten ist.

2. Stromschiene nach Anspruch 1, **dadurch gekennzeichnet, dass** die in Längsrichtung verlaufende Ausnehmung (3) des oberen Trägers (2) zur passenden Aufnahme des Hakenkopfes (9) einer Hakenkopfschraube (8) ausgebildet ist.

3. Stromschiene nach Anspruch 1 oder 2, **dadurch gekennzeichnet, dass** der obere Träger (2) ein unteres Profilstück (10) aufweist, das die oberen Enden der beiden Schenkel (15, 16) miteinander verbindet, wobei sich an die Enden des unteren Profilstücks (10) unter Bildung der an den gegenüberliegenden Längsseiten hinterschnittenen Ausnehmung (3) nach oben erstreckende Schenkel (11, 12) anschließen, an die zu beiden Seiten abstehende obere Arme (13, 14) angeformt sind.

4. Stromschiene nach einem der Ansprüche 1 bis 3, **dadurch gekennzeichnet, dass** an die Schenkel (15, 16) im Übergangsbereich zu den Klemmarmen (17, 18) zu beiden Seiten abstehende untere Arme (24, 25) angeformt sind.

5. Fahrleitungssystem mit Auslegern, an denen Stromschienen (1) nach einem der Ansprüche 1 bis 4 hängen.

6. Fahrleitungssystem nach Anspruch 1, **dadurch gekennzeichnet, dass** die Stromschienen (1) an den Auslegern (31) mittels Verbindungselementen (8, 30) befestigt sind, die in die in Längsrichtung der Stromschienen verlaufenden Ausnehmungen (3) der Stromschienen (1) greifen.

7. Fahrleitungssystem nach Anspruch 6, **dadurch gekennzeichnet, dass** die Verbindungselemente (8, 30) an den Momenten-Nullpunkten der Stromschienen (1) angeordnet sind.

8. Fahrleitungssystem nach Anspruch 6 oder 7, **dadurch gekennzeichnet, dass** die Verbindungselemente Hakenkopfschrauben (8) sind.

9. Fahrleitungssystem nach Anspruch 8, **dadurch gekennzeichnet, dass** die Hakenkopfschrauben (8) mit Profilen (31C) der Ausleger (31) verschraubt sind.

10. Fahrleitungssystem nach Anspruch 9, **dadurch gekennzeichnet, dass** die Profile (31C) der Ausleger (31) U-Profile sind.

## Claims

1. Conductor rail comprising a carrier (2) which is at the top when in the installation position and to which two downwardly extending legs (15, 16) are connected, which legs transition into inwardly extending clamping arms (17, 18) for receiving a contact wire, the upper carrier (2), the two legs (15, 16) and the clamping arms (17, 18) enclosing an intermediate space (19) for receiving connection pieces (20, 21), **characterised in that** the upper carrier (2) comprises, on the upper side, a recess (3) which extends in the longitudinal direction of the carrier and is undercut at the opposite longitudinal sides (11, 12).

2. Conductor rail according to claim 1, **characterised in that** the recess (3) of the upper carrier (2) extending in the longitudinal direction is designed so as to receive the hook head (9) of a hook head bolt (8) in a fitted manner.

3. Conductor rail according to either claim 1 or claim 2, **characterised in that** the upper carrier (2) comprises a lower profile part (10) which interconnects the upper ends of the two legs (15, 16), upwardly extending legs (11, 12) being connected to the ends of the lower profile part (10) so as to form the recess (3) undercut at the opposite longitudinal sides, on which upwardly extending legs upper arms (13, 14) are formed, protruding at either side.

4. Conductor rail according to any of claims 1 to 3, **characterised in that** lower arms (24, 25), protruding at either side, are formed on the legs (15, 16) in the transition region to the clamping arms (17, 18).

5. Overhead contact system comprising cantilevers on which conductor rails (1) according to any of claims 1 to 4 hang.

6. Overhead contact system according to claim 1, **characterised in that** the conductor rails (1) are attached to the cantilevers (31) by means of connection elements (8, 30) which engage in the recesses (3) of the conductor rails (1) extending in the longitudinal direction of the conductor rails.

7. Overhead contact system according to claim 6, **characterised in that** the connection elements (8, 30) are arranged at the zero moment points of the conductor rails (1).

8. Overhead contact system according to either claim 6 or claim 7, **characterised in that** the connection elements are hook head bolts (8).

9. Overhead contact system according to claim 8, **characterised in that** the hook head bolts (8) are screwed to profiles (31C) of the cantilevers (31).

10. Overhead contact system according to claim 9, **characterised in that** the profiles (31C) of the cantilevers (31) are U-shaped profiles.

## Revendications

1. Rail d'alimentation avec un support supérieur (2) dans la position d'installation, auquel deux branches (15, 16) s'étendant vers le bas se raccordent, lesquelles passent dans des bras de serrage (17, 18) s'étendant vers l'intérieur pour la réception d'un fil de contact caténaire, le support supérieur (2) ainsi que les deux branches (15, 16) et les bras de serrage (17, 18) formant un espace intermédiaire (19) pour la réception de pièces de liaison (20, 21),
**caractérisé en ce que**
le support supérieur (2) présente, sur le côté supérieur, un évidement (3) s'étendant dans le sens longitudinal du support, lequel évidement est contre-dépouillé sur les côtés longitudinaux (11, 12) en regard.

2. Rail d'alimentation selon la revendication 1, **caractérisé en ce que** l'évidement (3) s'étendant dans le sens longitudinal du support supérieur (2) est réalisé pour la réception adaptée de la tête de crochet (9) d'une vis à tête de crochet (8).

3. Rail d'alimentation selon la revendication 1 ou 2, **caractérisé en ce que** le support supérieur (2) présente une pièce profilée inférieure (10) qui relie entre elles les extrémités supérieures des deux branches (15, 16), des branches (11, 12) s'étendant vers le haut se raccordant aux extrémités de la pièce profilée inférieure (10) en formant l'évidement (3) contre-dépouillé sur les côtés longitudinaux en regard, sur lesquelles des bras supérieurs (13, 14) dépassant des deux côtés sont formés.

4. Rail d'alimentation selon l'une quelconque des revendications 1 à 3, **caractérisé en ce que** des bras inférieurs (24, 25) dépassant des deux côtés sont formés sur les branches (15, 16) dans la zone de transition aux bras de serrage (17, 18).

5. Système de caténaire avec des flèches, auxquelles des rails d'alimentation (1) selon l'une quelconque des revendications 1 à 4 s'accrochent.

6. Système de caténaire selon la revendication 5, **caractérisé en ce que** les rails d'alimentation (1) sont fixés sur les flèches (31) à l'aide d'éléments de liaison (8, 30) qui s'engagent dans les évidements (3) des rails d'alimentation (1) s'étendant dans le sens longitudinal des rails d'alimentation.

7. Système de caténaire selon la revendication 6, **caractérisé en ce que** les éléments de liaison (8, 30) sont agencés sur les points fixes à moment nul des rails d'alimentation (1).

8. Système de caténaire selon la revendication 6 ou 7, **caractérisé en ce que** les éléments de liaison sont des vis à tête de crochet (8).

9. Système de caténaire selon la revendication 8, **caractérisé en ce que** les vis à tête de crochet (8) sont vissées aux profils (31C) des flèches (31).

10. Système de caténaire selon la revendication 9, **caractérisé en ce que** les profils (31C) des flèches (31) sont des profils en U.
